# EUROPEAN PATENT APPLICATION

(11) **EP 2 762 226 A1**
(43) Date of publication of application: **06.08.2014**
(21) Application number: 13153657.5
(22) Date of filing: 01.02.2013
(51) Int. Cl.: B01J 13/00, B05D 1/00, C09D 5/44

(54) **Hybrid coating and method to obtain such coating**

(71) Applicant: Centre de Recherche Public Henri Tudor, 1855 Luxembourg (LU)
(72) Inventor: Petersen, Julien, 57350 SPICHEREN (FR); Becker, Claude, 57330 ZOUFFTGEN (FR); Mertz, Grégory, 57270 UCKANGE (FR)
(74) Representative: Pronovem

(57) **Abstract**

The present invention relates to a method for producing a colloidal suspension of nanoparticles, said method comprising the steps of providing a solid target submerged in a liquid media being a coating forming material, submitted said solid target to pulsed Laser irradiation, and to a method for producing hybrid coating on a substrate comprising the steps of generating a plasma, introducing into the plasma a colloidal suspension of nanoparticles and exposing at least a part of a surface of the substrate to the plasma comprising the colloidal suspension of nanoparticles.

## Description

### Field of the invention

The present invention relates to a method for producing a colloidal suspension of nanoparticles and to a method for producing on a substrate an hybrid coating comprising nanoparticles.

### Prior art and related technical background

Organic coatings comprising nanoparticles (particles having a diameter above 1nm and lower than 1µm) of inorganic material are known as organic-inorganic hybrid coatings and methods to produce such coatings are well-known.

For example, supercritical fluids (SCFs) have been used to deposit thin metal films onto a wide range of surfaces and incorporate metallic particles into different inorganic and organic substrates for microelectronic, optical and catalytic applications (Yi. Zhang, C. Erkey, The Journal of Supercritical Fluids, 2006, 38, 2, pp 252-267).

Hybrid coatings may also be obtained by sol/gel methods which comprise the mixing of inorganic and organic components at the nanometric scale.

Atmospheric plasma polymerization, a well-known and cost-effective technique for the deposition of a wide variety of coatings, may also be used to produce hybrid coatings as described in I.S. Bae, S.-J. Cho, S.-H. Jeong, H. J. Cho,B. Hong, J.-H. Boo, Plasma Process. Polym. 2007, 4, S812-S816, O.Beier, A. Pfuch, K. Horn, J. Weisser, M. Schnabelrauch, A. Schimanski Plasma Process. Polym. 2012, online or in WO2007/008063.

However, such methods present the drawback of needing the production and the handling of nanoparticles powders not easy and safe to manipulate and may become a health hazard, either when the nanoparticles are injected as such in the plasma gas to produce the coating, or to prepare a solution, a dispersion, to be injected in the plasma gas. Furthermore, in such methods the ratio polymer of the coating/nanoparticles in the final hybrid coating and the dispersion of nanoparticles in the final polymer are difficult to control.

It has been suggested, as disclosed in H. Biederman, P. Hlidek, J. Pesicka, D. Slavinska, V. Stundzia, Vacuum, 1996, 47, 1385, or H. Boldyryeva, P. Hlidek, H. Biederman, D. Slavinska, A. Choukourov, Thin Solid Films, 2003, 442, 86, or P. Hlidek, J. Hanus, H. Biederman, D. Slavinska, J. Pesicka, Thin Solid Films, 2008, 516, 4581, to produce polymeric thin films with embedded metallic silver nanoparticles by simultaneous plasma polymerization deposition and the co-sputtering of metallic target materials at low pressure plasma conditions. However, such methods have the drawback of being low pressure processes and do not allow a good control of the quantity of nanoparticles embedded in the final hybrid coating.

Another main drawback of the methods described above is that none of the hybrid coatings obtained combine both superhydrophobic and superoleophobic properties.

In addition, nanoparticles can be produced in liquid phase by different methods, for example chemistry (chemical syntheses), or by laser radiation, particularly by Liquid Phase Pulsed Laser Ablation (LP-PLA).

LP-PLA method has been used to produce a wide range of colloidal solution of nanomaterials, as for example Ag nanoparticles in water (Pyatenko A, Shimokawa K, Yamaguchi M, Nishimura O, Suzuki M, Appl. Phys.A., 2004, 79, 803), Au nanoparticles in water (Tarasenko N V, Butsen A V, Nevar E A, Savastenko N A, Appl. Surf. Sci., 2006, 252, 4439), ZnO nanoparticles in water (Zeng H B, Cai W P, Hu J L, Duan G T, Liu P S, Li Y, Appl. Phys. Lett., 2006, 88, 171910).

### Aims of the invention

The present invention aims to provide a method for producing a colloidal suspension of nanoparticles, for producing an organic-inorganic hybrid coating and to provide such coating with improved properties over the prior art.

The present invention further aims to provide a method for producing a colloidal suspension of nanoparticles and for producing an organic-inorganic hybrid coating which are alternatives to traditional.

The present invention further aims to provide a method for producing a colloidal suspension of nanoparticles and for producing an organic-inorganic hybrid coating which are safe and easy to implement.

The present invention also aims to provide an organic-inorganic hybrid coating with water and oil repellent properties.

### Summary of the invention

The present invention relates to a method for producing a colloidal suspension of nanoparticles, said method comprising the steps of providing a solid target submerged in a liquid media being a coating forming material and submitted said solid target to pulsed Laser irradiation.

According to particular embodiments, the method for producing a colloidal suspension of nanoparticles may comprise one, or a combination, of any of the following characteristics:
- the pulsed Laser irradiation is performed at a fixed wavelength comprised between 193nm and 1064nm during 4ns and 7ns
- the concentration of nanoparticles in the colloidal suspension is comprised between 0.01 and 50 g/L,
- the solid target is a metal or a metal alloy, a metal or metal alloy salt or a combination thereof,
- the solid target is a thermoplastic polymer,
- the solid target is graphite, grapheme, diamond, amorphous carbon, pyrolitic carbon, lonsdaleite, or a combination thereof,
- the coating forming material comprises an acrylate or methacrylate monomer, an organosilicone or silane monomer, a phosphate or phosphonate monomer, an amine monomer, a fluoro monomer, an aromatic monomer, or a combination thereof,
- the target comprises zinc, titanium or aluminium and the coating forming material is hexamethyldisiloxane (HMDSO),
- the coating forming material comprises one or a plurality of fluoro precursors having the following formula:

   CFR₁R₂- (CF₂)ₙ- (CR₃R₄)ₘ-X

   wherein R₁, R₂, independently of one another are hydrogen, fluorine, a fluoro-alkyl (C₁-C₄) or CF₃, n is comprised between 3 to 30, R₃, R₄, independently of one another and independently of R₁ and R₂, are hydrogen, an alkyl(C₁-C₄), an hydroxyl, m is 1 or 2 or 3, X is O-CO-CR₅=CHR₆ wherein R₅ and R₆, independently of R₁, R₂, R₃ and R₄, are hydrogen or a methyl group, or X is - Y-Si-(R₇)₃, wherein Y is oxygen or nothing, and R₇, independently of R₁, R₂, R₃, and R₄, is an alkoxy group,
- the target comprises silver or zinc and the coating forming material is 1H,1H,2H,2H-perfluorodecylacrylate,

The present invention further relates to a method for producing an hybrid coating on a substrate, said method comprising the steps of a) producing a colloidal suspension of nanoparticles according to any of the claims 1 to 10, or by providing a solid target submerged in a liquid media comprising a coating forming material and submitted said solid target to pulsed Laser irradiation, b) providing a substrate, c) generating a plasma in a treatment space, under atmospheric pressure, using a dielectric barrier discharge, by supplying a plasma gas between at least a first and a second electrode connected to alternating current (AC) power means, said first and second electrodes defining said treatment space, d) introducing into said plasma said colloidal suspension of nanoparticles, and e) exposing in said treatment space at least a part of a surface of said substrate to said plasma comprising said colloidal suspension of nanoparticles.

According to a particular embodiment of the method for producing an hybrid coating on a substrate, the exposure of at least a part of a surface of the substrate to the plasma comprising said colloidal suspension of nanoparticles is performed in multiple successive passes within the treatment space by moving the substrate or the at least first and second electrode, or both, without stopping, from one pass to another, the generation of the plasma and the introduction of the colloid suspension of nanoparticles into said plasma.

The present invention further relates to an hybrid coating obtained with the method according to the invention and comprising nanoparticles having a size comprised 1 to 500nm, the hybrid coating having a contact angle of at least 150° for water and 130° for hexadecane.

### Brief description of the drawings

Figure 1 is a principle scheme of a liquid phase pulsed Laser ablation system to produce the nanoparticles according to the invention.

Figure 2 is a schematic representation of an embodiment of an atmospheric pressure plasma dielectric barrier discharge reactor.

Figure 3 represents FTIR-ATR spectra of PFDA monomer with or without Ag nanoparticles.

Figure 4 represents FTIR-ATR spectra of HMDSO monomer with or without different types of nanoparticles.

Figure 5 represents the nanoparticle sizes according to the laser fluence for a Ti target ablated in the HMDSO monomer.

Figure 6 represents a plot of the particles sizes according to the height of PFDA monomer brightened up with Dynamic Light Scattering (DLS) measurements.

Figure 7 represents a FE-SEM picture in STEM mode of Ag nanoparticles produced in PFDA monomer.

Figure 8 represents FE-SEM pictures in STEM mode of a) ZnO, b)AL₂O₃, c)TiO₂ nanoparticles produced in HMDSO monomer.

Figure 9 represents the XRD pattern of the Al₂O₃ nanoparticles obtained in PFDA monomer.

Figure 10 represents the XRD pattern of ZnO nanoparticles obtained in HMDSO monomer.

Figure 11 represents the XRD pattern of TiO₂ nanoparticles obtained in HMDSO monomer.

Figure 12 represents UV/Vis spectra of solution containing Ag nanoparticles in PFDA monomer after different ablation duration and representation of the relative abundance of produced nanoparticles according to the irradiation duration.

Figure 13 represents represents UV/Vis spectra of solution containing Al₂O₃ nanoparticles in HMDSO monomer after different ablation duration and representation of the relative abundance of produced nanoparticles according to the irradiation duration.

Figure 14 represents Quartz Crystal Microblance (QCM) evaluation of the mass gain after drying a 5mL droplet of HMDSO monomer containing Silver nanoparticles (for a 2.5min of irradiation duration) directly on the crystal.

Figure 15 represents the evaluation of the nanoparticles concentration in HMDSO monomer for different ablation times.

Figure 16 represents XPS spectra of nanoparticles embedded in the hybrid coatings according to the invention.

### Detailed description of the invention

### Nanoparticles production

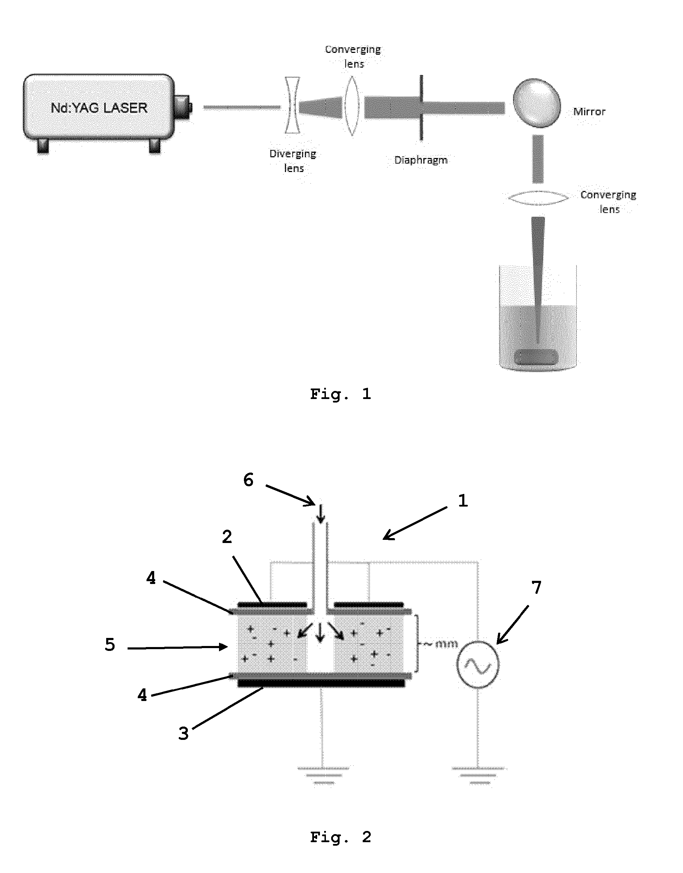

According to the invention, nanoparticles are produced by Laser ablation, preferably pulsed Laser ablation, of a solid target provided in a liquid media comprising a coating forming material, or in a preferred embodiment, in a liquid media being the coating forming material (figure 1).

The interaction of the Laser with the solid target causes the target surface to vaporize in the form of an ablation plume which contains species such as atoms, ions, and clusters, travelling with high kinetic energy, to form nanodroplets. After solidification by the extreme decrease of the temperature in solution, the nanoparticles will be produced with their final structures.

The solid target is an organic or inorganic target or an hybrid organic-inorganic solid target.

The solid target has any suitable size en thickness according to the container used for Laser ablation and to the quantity of nanoparticles to produces. The thickness of the target may be from 1µm to several mm or cm.

The solid target may be a metal or a plurality of metals, a metal alloy or a plurality of alloys, a metal or metal alloy oxide or a plurality of metal or alloy oxides, a metal or metal alloy salt or plurality of metal or metal alloy salts, or a combination thereof.

It may be a noble metal such as gold, silver, platinum, osmium, iridium, palladium, rhodium, ruthenium or a combination thereof. It may be copper, titanium, zinc, aluminum, silicon, boron, iron, vanadium, molybdenum, cadmium, scandium, chromium, manganese, cerium, cobalt, nickel, copper, yttrium, zirconium, niobium, tantalum, gallium, lead, tin, indium, gallium, germanium, tungsten, mercury, their alloys, their oxides or a combination thereof.

It may be a inorganic and non-metallic target. It may be potassium, phosphorus, calcium, magnesium, a ceramic, a clay.

It may be carbon, all the allotropes of carbon, for example graphite, grapheme, diamond or amorphous carbon, pyrolitic carbon, lonsdaleite or a combination thereof.

It may be a thermoplastic polymer, a thermoplastic resin, an elastomer or a thermoplastic elastomer.

The liquid media is preferably water or an alcohol, for example methanol, ethanol, isopropanol, acetone, ammonia and a mixture thereof. It may further comprise a surfactant or an anti-aggregation additive or combination of additives, preferably at a concentration of between 0.0001M and 0.1M. In this embodiment, the coating forming material may be in liquid which is mixed with the liquid media or may be a powder solubilized in the liquid media.

Preferably, the liquid media, as such, is transparent to the Laser irradiation wavelength used, or comprises components which do not have absorption, or have limited absorption, at the Laser irradiation wavelength used.

In a preferred embodiment the liquid media is the coating forming material which is in liquid form. In this embodiment no solvent is used. Nevertheless, the coating forming material may comprise traces of solvents, or other impurities coming from their synthesis, present in usual amounts in commercial grades of coating forming material. It may nevertheless comprise a stabilizer or polymerisation inhibitors. However, the coating forming material is preferably as pure as possible and may be purified before use.

In this embodiment, the coating forming material is transparent to the Laser irradiation wavelength used, or have limited absorption.

This embodiment has the advantage of reducing or eliminating the oxidation phenomenon due to the oxygen containing solvent used as liquid media, reducing or eliminating thus the formation of unwanted oxides. It allow thus to reduce or eliminate the formation of contaminants and side products, which are not the expected nanoparticles made of the organic, inorganic or hybrid organic-inorganic material from the target. Furthermore, it has the advantage of reducing or eliminating compatibility issues which may occur with the components or devices used for the atmospheric plasma polymerisation to produce the final hybrid coating. Furthermore, it has the advantage of not needing a step of purification of the nanoparticles.

The coating forming material comprise a polymerisable monomer or a combination of polymerisable monomers. It is preferably an acrylate or methacrylate monomer, an organosilicone or silane monomer, a phosphate or phosphonate monomer, an amine monomer, a fluoro monomer, an aromatic monomer, or a combination thereof. It may also comprise precursor of conjugated polymers such as thiophene, pyrrole or aniline.

Preferably, the coating forming material is acrylic acid monomer or methacrylic acid monomer.

Preferably, the coating forming material is hexamethyldisiloxane (HMDSO) monomer, tetraethylorthosilicate (TEOS) monomer.

Preferably, the coating forming material is diethyl-2-(methacryloyloxyethyl)phosphate, diethyl-phosphato-ethyl-triethoxy-silane (DEPETS) or dimethyl-vinyl-phosphonate (DMVP).

Preferably, the coating forming material is allylamine.

Preferably, the coating forming material is 3,4-ethylene-dioxyl-thiophene (EDOT) or aniline.

Preferably, the coating forming material may be selected from the group consisting in fluoro-acrylate monomers, fluoro-alkyl acrylate monomers, fluoro-methacrylate monomers, fluoro-alkyl methacrylate monomers fluoro-silane or a combination thereof.

Preferably, the polymerisable monomer or monomers have the following formula:

CFR₁R₂-(CF₂)ₙ-(CR₃R₄)ₘ-X

wherein R₁, R₂, independently of one another are hydrogen, fluorine, a fluoro-alkyl (C₁-C₄) or CF₃, n is comprised between 3 to 30, R₃, R₄, independently of one another and independently of R₁ and R₂, are hydrogen, an alkyl(C₁-C₄), an hydroxyl, m is 1 or 2 or 3, X is O-CO-CR₅=CHR₆ wherein R₅ and R₆, independently of R₁, R₂, R₃ and R₄, are hydrogen or a methyl group, or X is - Y-Si-(R₇)₃, wherein Y is oxygen or nothing, and R₇, independently of R₁, R₂, R₃, and R₄, is an alkoxy group.

In a preferred embodiment, the polymerisable monomer or monomers are selected from the group consisting of 1H,1H-perfluorohexyl acrylate, 1H,1H,5H-octafluoropentyl acrylate, 1H,1H-perfluoroheptyl acrylate, 1H,1H,7H-perfluoroheptyl acrylate, 1H,1H-Perfluorooctyl acrylate, 1H,1H-perfluorodecyl acrylate, 1H,1H-perfluorododecyl acrylate, 1H,1H,11H-perfluoroundecyl acrylate, 1H,1H,2H,2H-nonafluorohexyl acrylate, 1H,1H,2H,2H-perfluoro-7-methyloctyl acrylate, 1H,1H,2H,2H-perfluorooctyl acrylate, 2-(Perfluoro-7-methyloctyl)ethyl acrylate, 1H,1H,2H,2H-perfluorodecyl acrylate, 1H,1H,2H,2H-perfluorodecyl acrylate, eicosafluoro-11-(trifluoromethyl) dodecyl acrylate, 1H,1H,2H,2H-perfluorododecyl acrylate, 1H,1H,2H,2H-perfluorododecyl acrylate, 3-(Perfluoro-3-methylbutyl)-2-hydroxypropyl methacrylate, 3-(Perfluoro-5-methylhexyl)-2-hydroxypropyl methacrylate, 1H,1H-perfluorohexyl methacrylate, 1H,1H,5H-octafluoropentyl methacrylate, 1H,1H-perfluoroheptyl methacrylate, 1H,1H,7H-perfluoroheptyl methacrylate, 1H,1H-perfluorodecyl methacrylate, 1H,1H-perfluorododecyl methacrylate, 1H,1H,11H-perfluoroundecyl methacrylate, 1H,1H,2H,2H-nonafluorohexyl methacrylate, 1H,1H,2H,2H-perfluoro-7-methyloctyl methacrylate, 1H,1H,2H,2H-perfluorooctyl methacrylate, 2-(Perfluoro-7-methyloctyl)ethyl methacrylate, 1H,1H,2H,2H-perfluorodecyl methacrylate, 1H,1H,2H,2H-perfluorodecyl methacrylate, eicosafluoro-11-(trifluoromethyl) dodecyl methacrylate, 1H,1H,2H,2H-perfluorododecyl methacrylate, 1H,1H,2H,2H-perfluorododecyl methacrylate, 3-(Perfluoro-3-methylbutyl)-2-hydroxypropyl methacrylate, 3-(Perfluoro-5-methylhexyl)-2-hydroxypropyl methacrylate, di-isopropyl(1H,1H,2H,2H-perfluorodecyl)silane, 1H,1H,2H,2H-perfluoro-octyltriethoxysilane, trichloro (1H,1H,2H,2H-perfluorooctyl)silane, 1H,1H,2H,2H-perfluoro-octyltrimetoxysilane,3,3,3-trifluoropropyl tri methoxysilane, (perfluoroalkyl)ethyl-triethoxysilane, nonafluorohexyl-triethoxysilane, bis(trifluoropropyl)tetramethyl disiloxane.

The Laser irradiation is preferably performed in a pulsed mode at a fixed wavelength comprised between 193nm and 1064nm for an organic target, between 266nm and 1064nm for an inorganic target, and between 193nm and 1064nm for an hybrid organic-inorganic target.

For example, for metals, metal alloys or metal oxides or metal alloy oxide, the characteristics of the Laser ablation are given in table 1.

**Table 1: Technical characteristics of the Laser ablation for metal-based or metal oxide-based target.**

| Wavelength | Pulse | duration Max | Energy Stability |
|---|---|---|---|
| 1064 nm | 5-7 ns | 450 mJ | 2.0 : 0.7 |
| 532 nm | 4-6 ns | 200 mJ | 3.5 : 1.2 |
| 355 nm | 4-6 ns | 65-100 mJ | 4.0 : 1.3 |
| 266 nm | 4-6 ns | 60 mJ | 7.0 : 2.3 |

### Examples

### Example 1

A solid target made of Zinc (99.99% pure, from Kurt J. Lesker 2,54 cm in diameter and 3.175 mm thick) in water as liquid media, comprising Aniline monomers as coating forming material, is irradiated at 1064 nm by using a Nd:YAG laser SURELITE I10 from Continuum Company.

### Example 2

The laser irradiation is performed as describe in example 1, except the fact that the irradiation is performed on a silver target in the coating forming material 1H, 1H, 2H, 2H-perfluorodecyl acrylate (PFDA) (CAS Number 27905-45-9) provided by Sigma Aldrich as liquid media.

### Example 3

Example 3 is identical as example 2 except the fact that the coating forming material is hexamethyldisiloxane (HMDSO) (CAS Number 107-46-0) from Sigma Aldrich.

### Example 4

Example 4 is identical as example 3 except the fact that the target used is Ti (99.7% pure from Kurt J. Lesker 2,54 cm in diameter and 3.175 mm thick).

### Example 5

Example 5 is identical as example 3 except the fact that the target used is Zr (Grade 702 from Kurt J. Lesker 2,54 cm in diameter and 3.175 mm thick).

### Example 6

Example 6 is identical as example 3 except the fact that the target used is Al (99.99% pure, from Kurt J. Lesker 2,54 cm in diameter and 3.175 mm thick).

### Example 7

Example 7 is identical as example 3 except the fact that the target used is Zn (99.99% pure, from Kurt J. Lesker 2,54 cm in diameter and 3.175 mm thick).

### Example 8

Example 8 is identical as example 3 except the fact that the target used is pyrolytic graphite (99.999% pure, from Kurt J. Lesker 2,54 cm in diameter and 3.175 mm thick).

The chemical composition of the coating forming material before and after the irradiation of the solid target was evaluated by FT-IR spectroscopy attenuated total reflectance (ATR) mode with a Bruker Optics Tensor 27 spectrometer. The evaluation of the nanoparticles sizes and shapes have been obtained by dynamic light scattering (DLS) by a Zetasizer nano ZS from MALVERN Company and Scanning electron transmission microscope (STEM) by a Quanta FEG 200 equipment from FEI Company, after having dried the coating forming material, which contain the nanoparticles, on a copper TEM grid covered with a graphite coating.

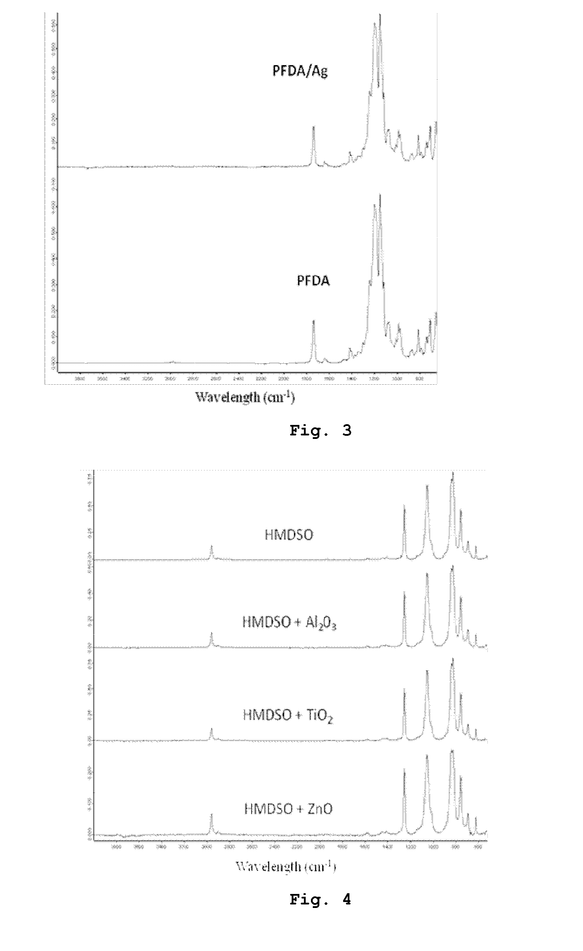

Surprisingly, it appears that the Laser irradiation of the solid target do not impact, or have limited negative impact, on the coating forming material as liquid media or comprised in the liquid media. As shown in figures 3 and 4 for metal targets, there are no significant changes on the different absorption bands of the FTIR-ATR spectra of the monomer used as coating forming material with or without nanoparticles. Thus, it appears that the Laser irradiation preserve the chemical functions of the monomers used to obtain the final coating.

Furthermore, the effect of photons energy seems to be negligible on the nanoparticles shapes. However it appears that by increasing the fluence of the Laser, the average size of the nanoparticles increased.

The particles size of the nanoparticles produced is comprised between 1 to 200 nm, preferably between 10 and 100 nm. To get particles lower than 100 nm, the irradiation energy must only be slightly above the ablation threshold of the solid target.

The particle size distribution of the different nanoparticles has be evaluated by Dynamic Light Scattering (DLS) measurements or by measuring the average size of particles estimated during FE-SEM observation in STEM mode. The average particle sizes of the different nanoparticles according to the laser fluencies are summarized in table 2.

**Table 2: Average particles size produced at different fluencies at a wavelength of 1064nm and for different monomers and metal targets.**

| | Laser fluence (J/cm²)* | Approximated size | Average size |
|---|---|---|---|
| Ag in PFDA monomer | 0.5 | - | - |
| | 1 | 25 | 24 |
| | 2 | 30 | 28 |
| | 3 | 30 | 22 |
| | 5 | 25 | 30 |
| TiO₂ in HMDSO monomer | 0.5 | 20 | 19 |
| | 1 | 100 | 89 |
| | 2 | 300 | 317 |
| ZnO in HMDSO monomer | 0.5 | 15 | 13 |
| | 1 | 80 | 69 |
| | 2 | 140 | 123 |
| Al₂O₃ in HMDSO monomer | 0.5 | 20 | 24 |
| | 1 | 60 | 56 |
| | 2 | 160 | 185 |

| | | | |
|---|---|---|---|
| * The spot size is estimated to 0,283 cm² for a fluence of 0,5J/cm² | | | |

For Ti, Zn, and Al targets in HMDSO monomer, from a Laser energy of 0.5 J/cm², nanoparticles could be obtained with a narrow particle size distribution in the range of 10 to 20 nm.

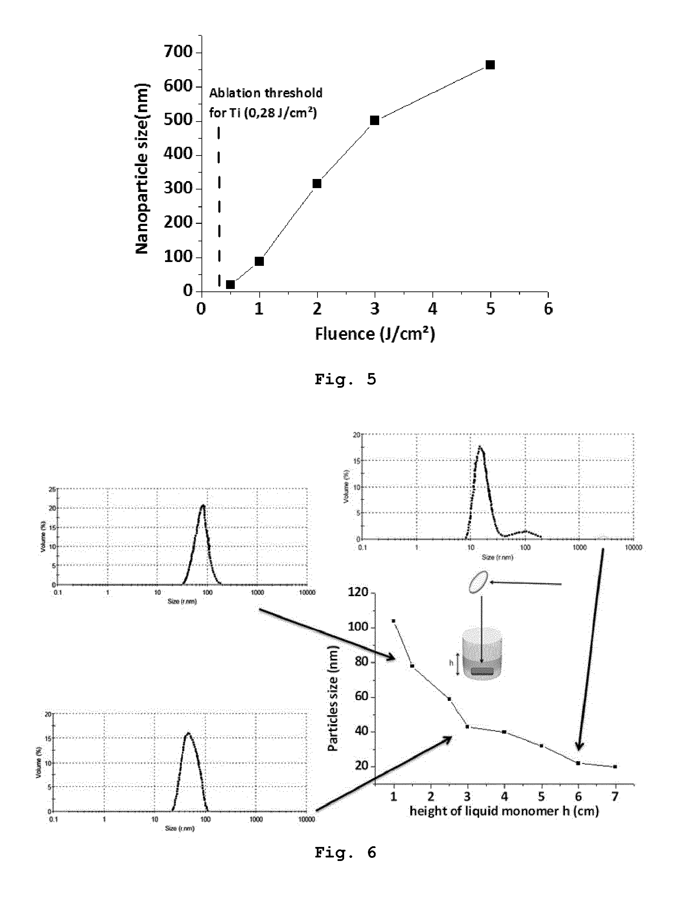

As higher Laser fluence seemed to promote more collisions between the vapor atoms/ions and more energetic species, granting their coalescence within the ablated plume forms larger particles. Therefore, smaller nanoparticles could be obtained with a Laser energy and fluence kept to the minimum value above the threshold ( for example 0.28 J/cm² for the Ti target, figure 5).

Regarding noble metal used as solid target, the sizes of silver nanoparticles for example is not drastically influenced by the laser fluence. Indeed, only the nature of the target, the nature of the liquid used and the height of this liquid above the solid target have an influence on the size and the shape of the produced nanoparticles. Furthermore by decreasing the fluence, for the same irradiation time, it appears that the abundance of the produced particles considerably decreased.

The influence of the liquid height during the Laser ablation is shown in figure 6 which illustrate the dependence of the hydro-dynamic diameter of the generated silver particles on the height of the PFDA liquid monomer in which they were collected. It appears that while ablation efficiency increased, for lower liquid heights, the hydrodynamic size of the generated particles also increased significantly (indicating that larger primary particles and/or agglomerates have been sputtered from the target.

When the solid target is submerged in the coating forming material, preferably as a liquid transparent to Laser irradiation, it appears that the plasma formed by the laser irradiation is confined in the liquid monomer and the induced pressure at the surface of the target is much greater by increasing the height of this monomer. It has been shown that the enhanced pressure has significant effects on Laser ablation of solid surfaces immersed in the liquid. By increasing the height of the liquid coating forming material, the particles sizes have been shrunken from 109nm to 21nm for height of 1cm up to 7cm, which finally reached a plateau starting from 6cm.

Similar results (not shown) have been obtained with the other experiments performed with Ti, Zn and Al targets in HMDSO monomer.

Surprisingly, the nanoparticles produced do not agglomerate and form a stable colloid suspension with well dispersed nanoparticles. This effect is more marked in the embodiment wherein the liquid media is the coating forming material.

The morphologies of the nanoparticles produced according to the invention, after having been dried, have been investigated by Field Emission Scanning Electron Microscope (FE-SEM) measurements in Scanning Transmission Electron Microscope (STEM) mode.

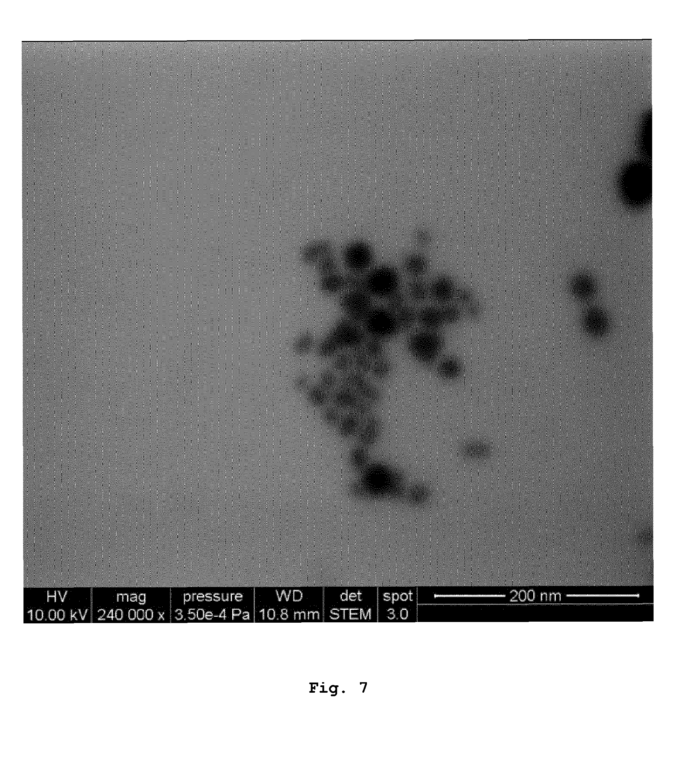

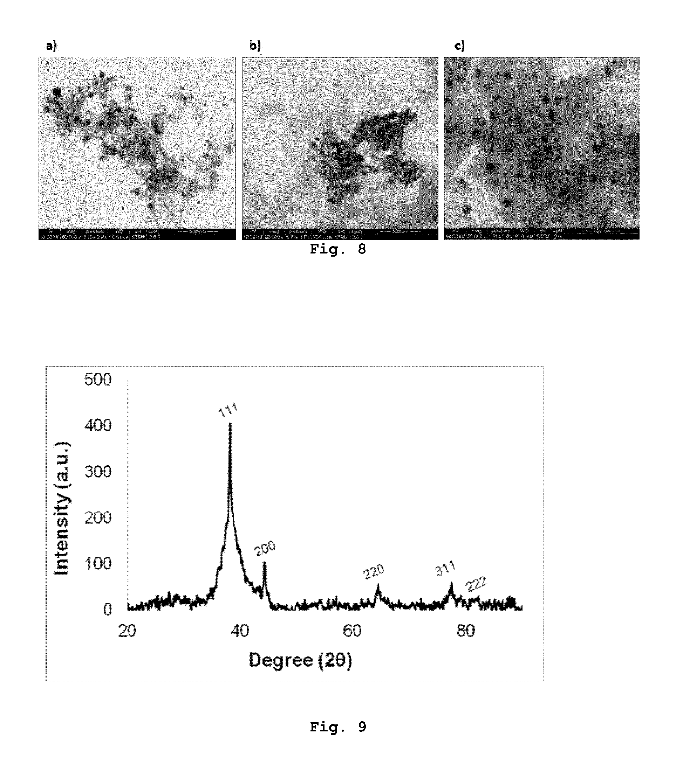

As shown in figure 7, it appears that Ag nanoparticles produced in PFDA monomer as liquid media have a spherical shape, this for the whole of the irradiation parameters. The same spherical shape is obtained for Ti, Al and Zn nanoparticles in HMDSO monomer as shown in figure 8.

The structure of ablated particles in both monomers was investigated by XRD measurement after being dried. It also confirms that the nanoparticles obtained according to the invention were free of impurities.

Regarding the Laser ablation of Ag target in PFDA monomer, the presence of the peaks in the XRD spectrum (figure 9), which reflects the crystal structure of metal Ag nanoparticles, is significant, indicating that no oxidation occurs in this process as usually for noble metals, moreover in a liquid monomer with a low content of oxygen.

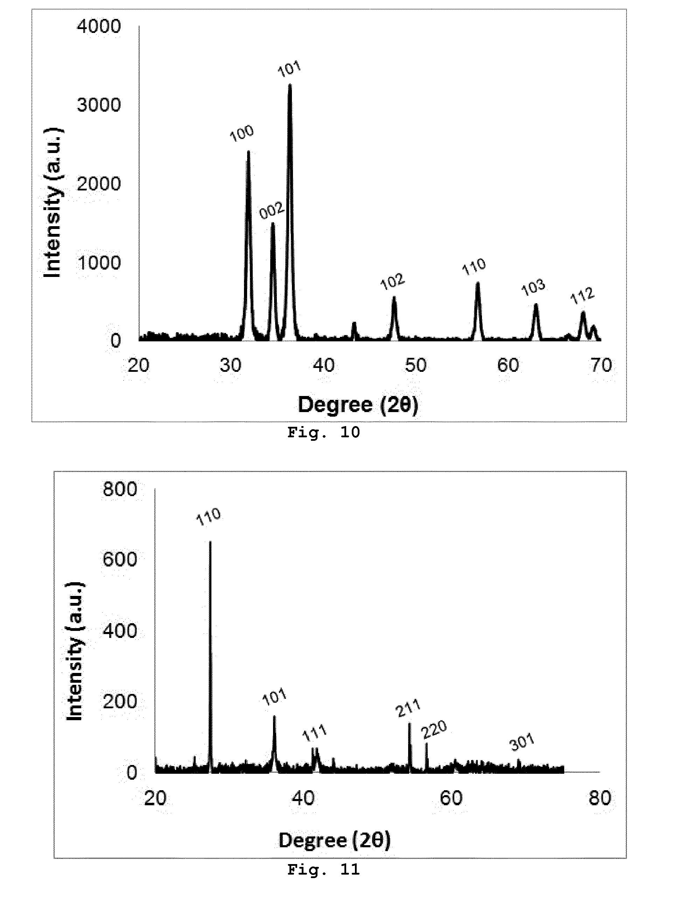

Regarding the Laser ablation of oxide metal targets, ZnO in HMDSO monomer (figure 10) or TiO₂ in HMDSO monomer (figure 11), the nanoparticles obtained according to the invention show their expected oxidized form.

Regarding the Al₂O₃ nanoparticles, XRD investigations are more difficult to perform. Alumina particles produced at room temperature are usually amorphous and this is observed for temperature up to 700°C and peaks exhibits broad and diffuse profiles. After an annealing above 800-900°C, progressive dehydration and desorption of hydroxyl groups on nanoparticles surfaces lead to the formation of the γ-Al₂O₃.

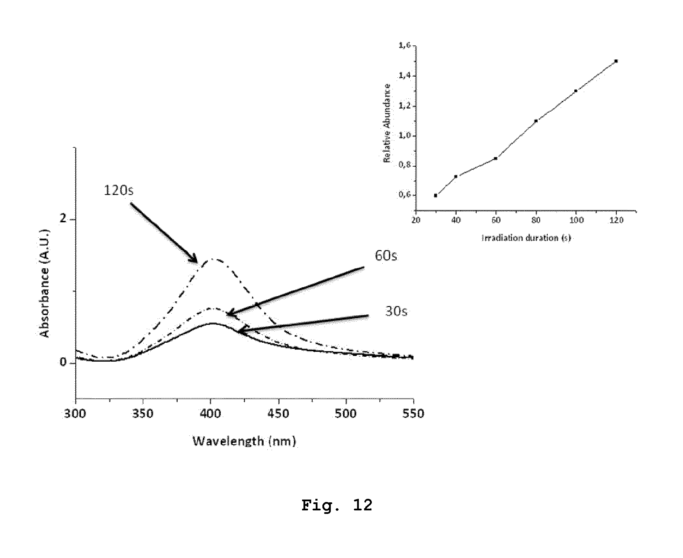

The concentration of the nanoparticles produced according to the invention was evaluated on the ablation of a pristine Ag solid target immerged in PFDA. The optical spectrum (figure 12) presents a maximum at about 400nm, which is typical of plasmon of Ag nano-particles. The intensity of the plasmon band increases with irradiation time or with fluence, and frequency for a constant time. However it has been revealed a shift of the maximum position of the plasmon band in other liquid (water, ethanol, isobutanol and dichloroethane) by modulating the ablation parameters, the position of this plasma band did not vary significantly in the PFDA monomer.

As also shown in figure 12, the peak relative intensity is proportional to the number of silver atoms contained in the monomer solution. It follows that the concentration of the nanoparticles can be derived from the UV/Vis absorbance, which corresponds to the relative abundance.

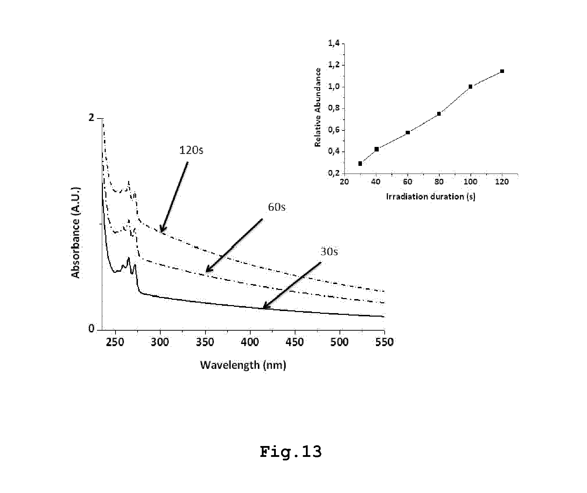

The ablation of Zn and Al targets in HMDSO monomer results in a whitening coloration of the liquid media and the opacity of the solution is proportional to the concentration of nanoparticles produced. The opacity of the solution with the suspended nanoparticles increased with the fluence, frequency and with the irradiation duration. As shown in figure 13, the difference of absorbance is due to the different Al₂O₃ nanoparticle concentrations suspended in the HMDSO monomer. Whereas, ablation of Ti in HMDSO produces a yellowing of the monomer solution at high laser fluence and whitening at fluences close to its ablation threshold.

As shown in figure 12 for Ag nanoparticles in PFDA, the peak relative intensity is proportional to the number of silver atoms contained in the monomer solution. It follows that the concentration of the nanoparticles can be derived from the UV/Vis absorbance, which corresponds to the relative abundance. Therefore, the UV/Vis spectrometry can be used to determine the relative abundance of each nanoparticle suspended in solution in the liquid media.

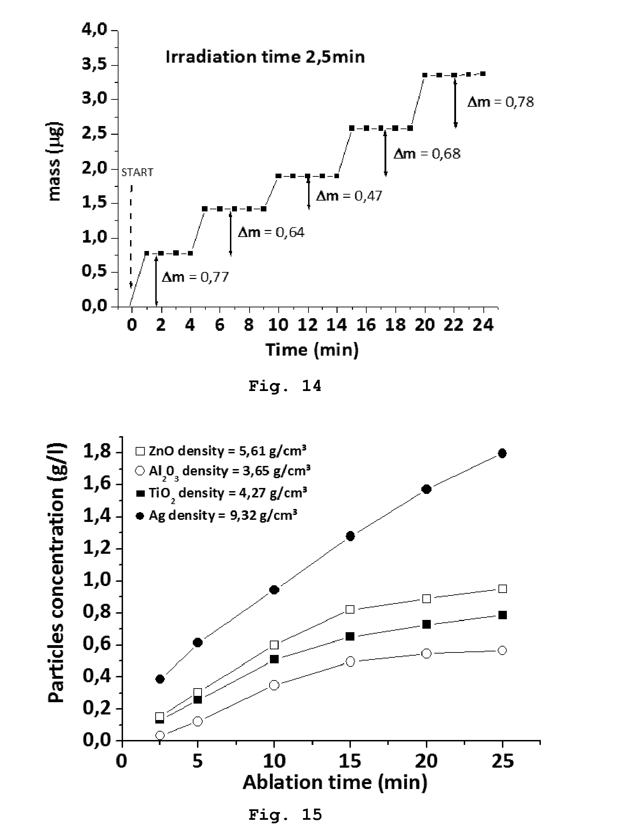

To calibrate the relative abundance to finally determine a nanoparticles concentration, a microbalance was used. A 5µL droplet of the HMDSO monomer (which is highly volatile in normal conditions) which contains the nanoparticles obtained, has been deposited on the crystal quartz of the microbalance. Due to the high volatility of the monomer, after 1 minute the mass measured is stable and a mass gain can be measured which corresponds to the residual nanoparticles on the crystal quartz (figure 14). Finally, the density for each nanoparticles being well-known, the nanoparticles concentration for each condition can be easily evaluated.

A linear increase in the relative abundance with the exposure time up to 10min as been shown, leading to a minimizing of the nanoparticles yield, probably due to the change in the solution opacity. However, the relative abundance, which corresponds to the UV/Vis absorption of the nanoparticles suspended in solution, can be converted in nanoparticles concentration and finally this calibration can be used for other transparent liquid media, or monomers, as far as the size distribution does not change significantly (figure 15).

Preferably, the nanoparticles concentration in the colloidal suspension is comprised between 0.01g/L and 50 g/L, more preferably between 0.01g/L and 5 g/L, even more preferably between 0.01g/L and 2 g/L.

The method of producing nanoparticles according to the invention have the advantage of not needing further purification steps. It is a low cost process, having a good reproducibility due to a good control of the irradiation parameters of target materials in well-known media. It is a safe method to produce nanoparticles as the nanoparticles produced are maintained in a liquid phase that prevents a possible health hazard and unwanted emission. Furthermore, the nanoparticles produced are solution, colloids, stable, ready to be used in a atmospheric plasma reactor.

### Hybrid coating

According to the present invention an hybrid coating is produced on all or a part of the surface of a substrate (or support) by atmospheric plasma polymerization of the colloidal suspension of nanoparticles obtained according to the invention or by pulsed Laser irradiation of a solid target submerged in a liquid media comprising a coating forming material.

By the term "surface" are meant outer surfaces of a substrate to be treated but also inner surfaces.

"Atmospheric plasma" is to be understood as being a plasma generated under atmospheric pressure, under a pressure substantially equal or equivalent to atmospheric pressure, with no reduction of pressure, i.e. no use of any vacuum.

The atmospheric plasma polymerization presents the advantage of being a one step process and not needing steps of heating, drying and/or curing the hybrid coating.

Preferably, a plasma reactor 1, in a dielectric barrier discharge (DBD) configuration, comprises, at a pressure substantially equal or equivalent to atmospheric pressure, at least a first electrode 2 and a second electrode 3, separated by an insulating dielectric barrier 4. Alternatively, a plurality of electrodes is provided. The at least first and second electrodes 2 and 3, or plurality of electrodes, define a treatment space 5, or process space, in which a substrate is provided.

The plasma reactor 1 according to the invention does not comprise a plurality of enclosures or chambers provided in series. It comprises a unique treatment space 5 defined by at least a first and a second electrodes 2 and 3, the treatment space 5 having dimensions in relation to the dimensions of the substrate to be treated. Preferably, the height of the treatment space 5 is of between 0.1 and 10 mm.

An embodiment of the plasma reactor 1 is represented at figure 2 having the electrodes 2 and 3 in a plane-plane configuration. However, different reactor configurations are possible. One or both of the electrodes 2 and 3 may be cylindrical, or may have a wire-plane configuration, or may be in a point-plane configuration.

The plasma reactor 1 further comprises power means connected to the electrodes 2 and 3, alternating current (AC) power means 7, to providing a high voltage alternating current (AC) to expose the substrate within the treatment space 5 to a DBD discharge generated between said first and second or plurality of electrodes 2 and 3.

The plasma generated in the dielectric-barrier discharge is considered as being a "cold" plasma, as the temperature recorded with the plasma or on adjacent surface are below 100°C. Preferably, the discharge is performed at room temperature.

The power density over the electrodes 2 and 3 is preferably comprised between 0.05 and 10 W.cm⁻². The plasma is generated by an alternating current (AC) voltage whose frequency is comprised between 0.1 and 3000 kHz.

Preferably, the plasma is generated with a power density over the electrodes 2 and 3 of 0.33 W.cm⁻², the AC power been set to apply 10 kV between the electrodes 2 and 3 and its frequency being set at 6kHz.

The plasma may be generated continuously, or in a pulsed mode comprising one or a plurality of cycles comprising a period of time wherein the plasma is generated and a period of time wherein the plasma is not generated. In a preferred embodiment, the plasma is generated in pulsed mode by using a pulsed AC generator.

In the treatment space 5, a plasma gas 6 is provided, said plasma gas comprising the coating forming material comprising the nanoparticles. Therefore, the plasma reactor 1 further comprises means to transport the plasma gas 6 between the electrodes 2 and 3, and possibly comprises an aerosol generator or a vapor generator.

In the embodiment shown in figure 2, the plasma gas 6 is preferably injected centrally through an opening in the electrode 2.

Preferably, the dielectric barrier materials 4 is made of glass, quartz, ceramics or polymer-materials of low dielectric loss and high breakdown strength polymers.

The plasma gas 6 is a plasma generating gas, preferably an inert gas, preferably either helium (He) or argon (Ar), or a combination of helium (He) and argon (Ar).

The plasma gas 6, or gases, do not comprise any further gas, for example stabilisation gas or reactive gas, in particular, neither nitrogen, nor oxygen, but may nevertheless comprise the normal impurities comprised in pure He or Ar gas grades, in usual amounts in such grades.

The impurities coming from the atmosphere are reduced, or kept to an undetectable level, using a high flow of process gas, usually from 5 to 100 slm (standard liter per minute) which corresponds to residence time in the process space 5 between 0.03 and 7.5 s.

The coating forming material comprising the nanoparticles is introduced into the plasma gas 6 either in a liquid form, atomized or nebulized, or in a vaporized form. Preferably, the coating forming material is introduced in the form of an aerosol.

The coating forming material may be introduced into the plasma gas 6 continuously or discontinuously.

Preferably, the coating forming material comprising the nanoparticles is introduced in the plasma gas 6 at a mass flow comprised between 0.001 and 10g per liter of process gas.

The method according to the invention may be performed in static conditions, wherein the coating forming material is polymerised on the substrate surface while neither the electrodes 2 and 3, nor the substrate, is moved.

Preferably, the method is performed in dynamic conditions, wherein at least a part of the surface of the substrate is exposed, treated, a first time to the plasma comprising the coating forming material, and the treated part of the substrate is exposed to the plasma comprising the coating forming material at least a second time, preferably many times, within the treatment space 5.

In a first preferred embodiment, the substrate, or part of the substrate, is exposed to, treated by, the plasma within the same treatment space 5 by generating a plasma using a pulsed mode comprising one or a plurality of cycles comprising a period of time wherein the plasma is generated and a period of time wherein the plasma is not generated. Preferably, the plasma is generated in pulsed mode by using a pulsed AC generator.

In another preferred embodiment, the substrate, or part of the substrate, is exposed to, treated by, the plasma within the same treatment space 5 in multiple successive passes, or movements, without stopping the generating of the plasma and said introduction of said coating forming material into said plasma.

The multiple successive passes are achieved by moving the substrate, the at least first and/or second electrode 2 and 3, or both. Preferably, the electrode 2 or 3, preferably both electrodes 2 and 3, or the substrate, or the electrode 2 or 3 and the substrate are moved independently one from the other. They are moved according to different directions and/or with different velocities and/or while one electrode is stopped and the other is moved and/or while the substrate is stopped and the electrode(s) is (are) moved and *vice versa.*

The relative movement of the electrode 2 or 3 and/or the substrate may be a lateral or translational displacement, a rotational displacement, a vertical displacement, or a combination thereof.

The translational movement of the electrode 2 or 3, preferably of the two electrodes 2 and 3, and of the substrate, corresponds to a displacement along a direction parallel to the substrate or parallel to the electrodes 2 and 3 respectively. The multiple successive passes correspond to at least one back and forth movement, preferably a plurality of movements, within the treatment space 5.

The rotational movement of the electrode 2 or 3, preferably of the two electrodes 2 and 3 and of the substrate, corresponds to a displacement around an axis perpendicular to the substrate or to the electrodes 2 and 3. The multiple successive passes correspond to at least a 180 degree rotation of the substrate to expose a firstly treated part several times.

The vertical displacement of the electrode 2 or 3, preferably of the two electrodes 2 and 3 and of the substrate, corresponds to a displacement along a direction perpendicular to the substrate surface or to the electrodes 2 and 3. The multiple successive passes correspond to at least one up and down movement, preferably a plurality of movements, within the treatment space 5.

The multiple successive passes may comprise three dimensional movements, i.e. successive or concomitant translational, rotational and vertical movements, but in a preferred embodiments, the multiple successive passes comprise translational or rotational movements. In these embodiments, the distance between the substrate and the first electrode 2 and the distance between the substrate and the second electrode 3, are substantially constant, i.e. there is no, or limited, vertical movements of the substrate in respect to the electrodes 2 and 3 or of the electrodes 2 and 3 in respect to the substrate.

In embodiments comprising lateral or rotational movements, the number of passes is preferably of at least 10 movements, one movement being a back and forth movement for a lateral movement or a rotation of 180 degrees for a rotational movement, which corresponds to at least 60 seconds of treatment.

The relative movements of the electrode 2 or 3 and/or of the substrate is preferably performed at a relative speed comprised between 0.1 and 400 m.min⁻¹.

The deposition rate decreases as the monomer flow increases for a given power and process flow and varies from around 100 nm/min at low W/F to around 10 or 20 nm/min at high W/F.

The dynamic deposition conditions present the advantages of providing a better coating microstructure and topography, i.e. more homogeneous.

The substrate to be coated according to the invention may be a polymer-based film, non-woven materials, metal foils or plates, ceramic or composite material, natural materials, such as wood, liquids such as water.

### Examples of hybrid coatings

A dielectric barrier discharge is generated between an earthed bottom aluminium plate and two high-voltage aluminium top plates with a surface of 300cm² separated by a silicate dielectric barrier. The gap between the electrodes is set at around 2 mm. The plasma discharges is generated continuously by an AC power supply. The frequency is set to 6 kHz and the voltage is a sinusoid as a function of time. Electrical discharge value is 10 kV which corresponds to a power density over the electrodes of 0.33 W.cm⁻². A substrate, i.e. a silicon wafer, is positioned on the bottom electrode. The coating forming material comprising the nanoparticles (20 ml of PFDA/Ag solution (colloidal suspension of example 1), HMDSO/Ti (colloidal suspension of example 4), HMDSO/Zn (colloidal suspension of example 7) or HMDSO/Al (colloidal suspension of example 6) is atomized in a TSI 3076 device at different flow rates ranging from 0.7 to 3.5 slm. Helium gas is used as plasma gas at a flow of around 10 slm (standard liter per minute). The gas mixture containing the precursor aerosol is injected into the plasma through a slit between the two top electrodes. The deposition is carried out at atmospheric pressure and at room temperature.

Experiments have been performed in dynamic and static mode. In the static conditions, the polymerisation is performed while the electrodes or the substrate are not moved. In the dynamic conditions, the top electrode block moved laterally back and forth over the substrate at a relative speed of around 4 m.min⁻¹.

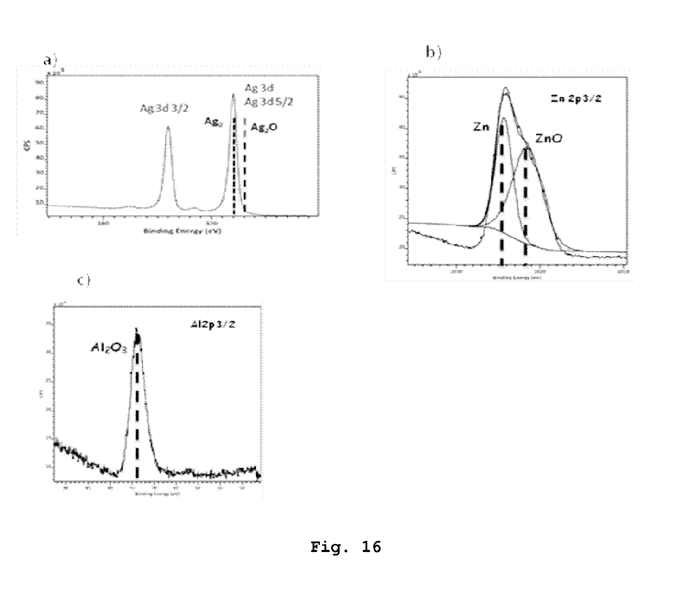

XPS analysis (Hemispherical Energy Analyzer SPECS, PHOIBOS 150) have been perfomed with a monochromatic Al K radiation operating at 200 W with an anode voltage of 16 kV. The pressure in the analysis chamber was 10⁻⁹ mbar. The XPS spectra (figure 16) were referenced with respect to the C 1s peak at 284.6 eV originating from carbon contamination. Core peaks were analyzed using a nonlinear Shirley-type background and fitted using 70 % Gaussian, 30 % Lorentzian lineshapes.

This analysis confirm that nanoparticles produced from a silver target in PFDA are present as silver metal (figure 16a) in the final hybrid coating. Furthermore, it appears that ZnO (with residual Zn as metal) and Al₂O₃ nanoparticles produced from respectively from zinc and aluminium target in HMDSO are present in the final hybrid coating.

Contact angles were measured on a OCA 15+ contact angle measuring instrument from Dataphysics, equipped with a CCD camera. Static water and hexadecane contact angles were measured with a 4 µL deionized water droplet to evaluate the superhydrophobicity properties Dynamic contact angle (advancing and receding contact angles) were determined automatically during growth and shrinkage of the droplet of distilled water by a drop shape analysis. Three measurements were made on each surface. WCAH, which is equal to the difference between advancing and receding contact angle, was then determined. The results are given in table 3.

**Table 3: Average contact angle values obtained on different hybrid coatings.**

| | Ag in PFDA monomer | TiO₂ in HMDSO monomer | ZnO in HMDSO monomer | Al₂O₃ in HMDSO monomer |
|---|---|---|---|---|
| Approximated size (nm) | 15 | 20 | 30 | 20 |
| Nanoparticles concentration in the monomer solution (g/L) | 1.25>C>0.2 | 0.6>C>0.1 | 0.8>C>0.1 | 0.45>C>0.05 |
| Range of Contact angle values with water | 150<θ<170 | 75<θ<90 | 80<θ<90 | 70<θ<90 |
| Range of Contact angle values with hexadecane | 105<θ<135 | - | - | - |
| WCAH | 2<WCAH<5 | - | - | - |

The method according to the invention presents the advantage of producing hybrid coatings with well-dispersed nanosized particles with a perfect control of their size and concentration. Using fluoro-acrylate monomers, fluoro-alkyl acrylate monomers, fluoro-methacrylate monomers, fluoro-alkyl methacrylate monomers fluoro-silane or a combination thereof as coating forming material, it allows getting hybrid coatings with high repellency properties for water (superhydrophobic coatings) and high repellency properties for oil (superoleophobic coatings), i.e. superoleophobic coatings having apparent contact angle (CA) above 150° for water and oil.

1H,1H,2H,2H-perfluorodecylacrylate/Ag hybrid coatings present the advantage of combining anti-bacterial activity and superhydrophic properties.

1H,1H,2H,2H-perfluorodecylacrylate/ZnO, 1H,1H,2H,2H-perfluorodecylacrylate/SiO₂, 1H,1H,2H,2H-perfluorooctyltriethoxysilane/ZnO, 1H,1H,2H,2H-perfluorooctyltriethoxysilane/SiO₂, perfluorosilane/ZnO, perfluorosilane/SiO₂ hybrid coatings present self-cleaning, anti-fogging, anti-fouling and hydroprotection properties.

HMDSO/CeO₂, TEOS/CeO₂, 1H,1H,2H,2H-perfluorodecylacrylate/CeO₂ hybrid coatings present anticorrosive properties.

HMDSO/TiO₂ HMDSO/ZnO, HMDSO/SiO₂ hybrid coatings present UV/O₂ barrier properties.

HMDSO/SiO₂ HMDSO/Al₂O₃ hybrid coatings present wear resistance properties.

PANi/ZnO, PEDOT/ZnO hybrid coatings may be used in organic photovoltaic or OLED devices.

HMDSO/TiO₂ HMDSO/ZnO, HMDSO/ZrO₂ hybrid coatings may be used in optical components.

HMDSO/TiO₂ hybrid coating presents photocatalytic activities.

PAni/ZnO coating may be used in sensors or biosensors.

### List of reference signs:

- 1: plasma reactor
- 2: first electrode
- 3: second electrode
- 4: insulating dielectric barrier
- 5: discharge space (process space)
- 6: gas flow
- 7: alternating current power means

## Claims

1. A method for producing a colloidal suspension of nanoparticles, said method comprising the steps of:
a) providing a solid target submerged in a liquid media being a coating forming material,
b) submitted said solid target to pulsed Laser irradiation.

2. The method according to claim 1, wherein the pulsed Laser irradiation is performed at a fixed wavelength comprised between 193nm and 1064nm during 4ns and 7ns.

3. The method according to claims 1 or 2, wherein the concentration of nanoparticles in the colloidal suspension is comprised between 0.01 and 50 g/L.

4. The method according to claims 1 to 3, wherein the solid target is a metal or a metal alloy, a metal or metal alloy salt or a combination thereof.

5. The method according to claims 1 to 3, wherein the solid target is a thermoplastic polymer.

6. The method according to claims 1 to 3, wherein the solid target is graphite, grapheme, diamond, amorphous carbon, pyrolitic carbon, lonsdaleite, or a combination thereof.

7. The method according to claims to any of the preceding claims, wherein the coating forming material comprises an acrylate or methacrylate monomer, an organosilicone or silane monomer, a phosphate or phosphonate monomer, an amine monomer, a fluoro monomer, an aromatic monomer, or a combination thereof.

8. The method according to any of the preceding claims, wherein the target comprises zinc, titanium or aluminium and the coating forming material is hexamethyldisiloxane (HMDSO).

9. The method according to claims to any of the preceding claims, wherein the coating forming material comprises one or a plurality of fluoro precursors having the following formula:
CFR₁R₂- (CF₂)ₙ- (CR₃R₄)ₘ-X
wherein R₁, R₂, independently of one another are hydrogen, fluorine, a fluoro-alkyl (C₁-C₄) or CF₃, n is comprised between 3 to 30, R₃, R₄, independently of one another and independently of R₁ and R₂, are hydrogen, an alkyl(C₁-C₄), an hydroxyl, m is 1 or 2 or 3, X is O-CO-CR₅=CHR₆ wherein R₅ and R₆, independently of R₁, R₂, R₃ and R₄, are hydrogen or a methyl group, or X is - Y-Si- (R₇) ₃, wherein Y is oxygen or nothing, and R₇, independently of R₁, R₂, R₃, and R₄, is an alkoxy group.

10. The method according to claims to any of the preceding claims, wherein the target comprises silver or zinc and the coating forming material is 1H,1H,2H,2H-perfluorodecylacrylate.

11. A method for producing an hybrid coating on a substrate, said method comprising the steps of:
a) producing a colloidal suspension of nanoparticles according to any of the claims 1 to 10, or by providing a solid target submerged in a liquid media comprising a coating forming material and submitted said solid target to pulsed Laser irradiation,
b) providing a substrate,
c) generating a plasma in a treatment space (5), under atmospheric pressure, using a dielectric barrier discharge, by supplying a plasma gas (6) between at least a first and a second electrode (2 and 3) connected to alternating current (AC) power means (7), said first and second electrodes (2 and 3) defining said treatment space (5),
d) introducing into said plasma said colloidal suspension of nanoparticles, and
e) exposing in said treatment space (5) at least a part of a surface of said substrate to said plasma comprising said colloidal suspension of nanoparticles.

12. The method according to claim 11, wherein step e) is performed in multiple successive passes within the treatment space (5) by moving the substrate or the at least first and second electrode (2, 3), or both, without stopping, from one pass to another, the generation of the plasma and the introduction of the colloid suspension of nanoparticles into said plasma.

13. An hybrid coating obtained with the method according to claims 11 or 12 comprising nanoparticles having a size comprised 1 to 500nm, said hybrid coating having a contact angle of at least 150° for water and 130° for hexadecane.
